# EUROPEAN PATENT SPECIFICATION

(11) **EP 1 632 516 B1**
(45) Date of publication and mention of the grant of the patent: **02.04.2008**
(21) Application number: 05024189.2
(22) Date of filing: 19.07.2001
(51) Int. Cl.: C08G 65/00, C08G 65/22, C10M 107/38, C10M 147/04

(54) **Perfluoropolyethers and processes therefor and therewith**
PERFLUORPOLYETHER UND VERFAHREN ZUR IHRER HERSTELLUNG
PERFLUOROPOLYETHERS ET LEURS PROCEDES DE PREPARATION ET D'UTILISATION

(30) Priority: 19.07.2000 US 219400 P
(43) Date of publication of application: 08.03.2006
(62) Divisional of application: 01952854.6
(73) Proprietor: E.I. du Pont de Nemours and Company, Wilmington, DE 19898 (US)
(72) Inventor: Howell, Jon L., Bear, DE 19701 (US); Perez, Erik William, Pennsauken, NJ 08109 (US); Waterfeld, Alfred, Tuscaloosa, AL 35401 (US); Friesen, Chadron Mark, Langly, British Columbia V1M 2N8 (CA); Thrasher, Joseph Stuart, Tuscaloosa, AL 35406 (US)
(74) Representative: Morf, Jan Stefan

(56) References cited:
- EP-A- 0 195 946
- EP-A- 0 340 739
- EP-A- 0 348 948
- EP-A- 0 472 423
- EP-A- 0 803 526

## Description

### FIELD OF THE INVENTION

The invention relates to a perfluoropolyether having improved thermostability over the presently available perfluoropolyethers, to a process therefor, and to a process therewith.

### BACKGROUND OF THE INVENTION

Hereinafter trademarks or trade names are shown in upper case characters.

Perfluoropolyethers (hereinafter PFPE) are fluids having important uses in oils and greases for use under extreme conditions. A property shared by the class is extreme temperature stability in the presence of oxygen and they find use in tribological or lubrication applications. Among their advantages as extreme lubricants is the absence of gums and tars among the thermal decomposition products. In contrast to the gum and tar thermal degradation products of hydrocarbons, the degradation products of PFPE fluids are volatile. In actual use, the upper temperature limit is determined by the stability of the oil or grease. Lewis acids, metal fluorides such as aluminum trifluoride or iron trifluoride, are formed as a result of heat at microscale loci of metal to metal friction; for instance as stationary bearings are started in motion. Thus the PFPE stability in the presence of the metal fluoride, although lower than the stability in the absence of the metal fluoride, establishes the upper performance temperature. The three commercial PFPEs, KRYTOX (from E.I. du Pont de Nemours and Company, Inc., Wilmington DE), FOMBLIN and GALDEN (from Ausimont/Montedison, Milan, Italy) and DEMNUM (from Daikin Industries, Osaka, Japan) differ in chemical structure. A review of KRYTOX is found in Synthetic Lubricants and High-Performance Fluids, Rudnick and Shubkin, Eds., Marcel Dekker, New York, NY, 1999 (Chapter 8, pp. 215 - 237). A review of FOMBLIN and GALDEN is found in Organofluorine Chemistry, Banks et al., Eds., Plenum, New York, NY, 1994, Chapter 20, pp. 431 - 461, and for DEMNUM, in Organofluorine Chemistry, Chapter 21, pp. 463 - 467.

The anionic polymerization of hexafluoropropylene epoxide as described by Moore in US Patent 3,332,826 can be used to produce the KRYTOX fluids. The resulting poly(hexafluoropropylene epoxide) PFPE fluids are hereinafter described as poly(HFPO) fluids. The initial polymer has a terminal acid fluoride, which is hydrolyzed to the acid followed by fluorination. The structure of a poly(HFPO) fluid is shown by Formula 1:

CF₃-(CF₂)₂-O-[CF(CF₃)-CF₂-O]ₛ-R_{f} (Formula 1)

where s is 2 - 100 and R_{f} is a mixture of CF₂CF₃ and CF(CF₃)₂, with the ratio of ethyl to isopropyl terminal group ranging between 20:1 to 50:1.

DEMNUM fluids are produced by sequential oligomerization and fluorination of 2,2,3,3-tetrafluorooxetane (tetrafluorooxetane), yielding the structure of Formula 2.

F-[(CF₂)₃-O]ₜ-R_{f}² (Formula 2)

where R_{f}² is a mixture of CF₃ or C₂F₅ and t is 2 - 200.

A common characteristic of the PFPE fluids is the presence of perfluoroalkyl terminal groups.

The mechanism of thermal degradation in the presence of a Lewis acid such as aluminum trifluoride has been studied. Kasai (Macromolecules, Vol. 25, 6791-6799, 1992) discloses an intramolecular disproportionation mechanism for the decomposition of PFPE containing -O-CF₂-O- linkages in the presence of Lewis acids.

FOMBLIN and GALDEN fluids are produced by perfluoroolefin photooxidation. The initial product contains peroxide linkages and reactive terminal groups such as fluoroformate and acid fluoride. These linkages and end groups are removed by ultraviolet photolysis and terminal group fluorination, to yield the neutral PFPE compositions FOMBLIN Y and FOMBLIN Z represented by Formulae 3 and 4, respectively

CF₃O(CF₂CF(CF₃)-O-)ₘ(CF₂-O-)ₙ-R_{f}³ (Formula 3)

where R_{f}³ is a mixture of -CF₃, -C₂F₅, and -C₃F₇; (m + n) is 8 - 45; and m/n is 20 - 1000; and

CF₃O(CF₂CF₂-O-)ₚ(CF₂-O)_{q}CF₃ (Formula 4)

where (p + q) is 40 - 180 and p/q is 0.5 - 2. It is readily seen that Formulae 3 and 4 both contain the destabilizing -O-CF₂-O- linkage since neither n nor q can be zero. With this -O-CF₂-O- linkage in the chain, degradation within the chain can occur, resulting in chain fragmentation.

For PFPE molecules with repeating pendant -CF₃ groups, Kasai discloses the pendant group provides a stabilizing effect on the chain itself and for the alkoxy end groups adjacent to a -CF(CF₃)-. Absent the -O-CF₂-O- linkage, the PFPE is more thermally stable, but its eventual decomposition was postulated to occur at end away from the stabilizing -CF(CF₃)- group, effectively unzipping the polymer chain one ether unit at a time.

Therefore, there is substantial interest and need in increasing the thermal stability of PFPE fluids.

Perfluoropolyether primary bromides and iodides are a family of highly useful and reactive chemicals that can be used, for example, as lubricants, surfactants, and additives for lubricants and surfactants. See, e.g., Journal of Fluorine Chemistry 1990, 47, 163; 1993, 65, 59; 1997, 83, 117; 1999, 93, 1; and 2001, 108, 147; Journal of Organic Chemistry 1967, 32, 833. *See also*, US Patents 3,332,826; 3,505,411; 4,973,762; 5,278,340; 5,288,376; 5,453,549; and 5,777,174.

Useful mono-functional (Formula A) and di-functional (Formula B) acid fluorides, which can be used in the present invention can be prepared cab be prepared as follows.

Φ-CF(CF₃)CF₂OCF(CF₃)C(O)-F Formula A

FC(O)CF(CF₃)OCF₂CF(CF₃)-Φ'-CF(CF₃)CF₂OCF(CF₃)C(O)F Formula B

where Φ and Φ' are respectively monovalent and divalent perfluoropolyether moieties. Additionally other acid fluorides of Formulae I and II are the reaction products formed from the polymerization of hexafluoropropylene oxide alone or with suitable starting materials, 2,2,3,3-tetrafluorooxetane, or the photooxidation of hexafluoropropylene or tetrafluoroethylene.

Secondary iodides from the acid fluorides can be prepared, for example at 0 - 60 °C using radiation from a photochemical lamp, for instance a lamp with an ultra-violet light output in the wavelength range of 220 - 280 nm (US Patent 5,288,376).

The usefuhless of this invention is demonstrated, for example, by the reactions of primary perfluoropolyether iodides with bromobenzene which could lead directly to perfluoropolyether substituted bromobenzene without the use of toxic or pyrophoric chemicals such as sulfur tetrafluoride or butyl lithium. These functionalized perfluoropolyether (PFPE) intermediates are used to form readily soluble, high temperature additives for fluorinated oils in boundary lubrication, as disclosed in US Patent 5,550,277. These primary bromides or iodides described herein can also be used as intermediates in the production of fluorous phase media for applications such as catalysis (Horváth, I., Acc. Chem. Res. 1998, 31, 641) or separations (Curran, D. P. Angew. Chem., Int. Ed. Engl. 1998, 37, 1174.), fluorosurfactants, and mold release agents.

Because there are few useful perfluoropolyether primary bromides or iodides and processes for producing them are not readily available to one skilled in the art, there is an ever increasing need to develop such products and processes.

### SUMMARY OF THE INVENTION

According to the invention, a perfluoropolyether and a composition comprising the perfluoropolyether are provided in which the perfluoropolyether comprises at least one halogen atom at the primary position of one or more end groups of the perfluoropolyether and the halogen atom is bromine or iodine.

Also provided is a process for producing the composition in which the process comprises contacting either (1) a perfluoropolyether acid fluoride with a metal bromide or metal iodide or (2) heating a perfluoropolyether secondary halide under a condition sufficient to effect the production of a perfluoropolyether comprising at least one bromine or iodine at the primary position of one or more end groups of the perfluoropolyether.

### DETAILED DESCRIPTION OF THE INVENTION

This invention is directed to a thermal stable perfluoropolyether (or PFPE) composition and processes for making and using the composition. The term "perfluoropolyether" and "PFPE fluid" ("PFPE" or "PFPE fluids") are, unless otherwise indicated, exchangeable.

According to the invention, the perfluoropolyether primary bromide or iodide are those having the formulae of F(C₃F₆O)_{z'}CF(CF₃)CF₂X, F[C₃F₆O]_{x'}CF₂CF₂X, XCF₂CF(CF₃)O(C₃F₆O)_{p'}R_{f}^{2'}O(C₃F₆O)_{n'}CF(CF₃)CF₂X, XCF₂CF₂O(C₃F₆O)_{x'}CF(CF₃)CF₂X, (R_{f}^{1'})(R_{f}^{1'})CFO(C₃F₆O)_{x'}CF(CF₃)CF₂X, and combinations of two or more thereof where X is I or Br, x' is a number from 2 to about 100, z' is a number from about 5 to about 100, p' is a number from 2 to about 50, n' is a number from 2 to about 50,
each R_{f}^{1'} can be the same or different and is independently a monovalent C₁ to C₂₀ branched or linear fluoroalkanes, R_{f}^{2'} is a divalent C₁ to C₂₀ branched or linear fluoroalkanes, and C₃F₆O is linear or branched.
The inventive composition may further comprise a thickener and said perfluoropolyether is present in said composition in the range of from about 1.0 to about 50 weight% based on said composition.
Preferably, said thickener is selected from the group consisting of poly(tetrafluoroethylene), fumed silica, and boron nitride, and combinations of two or more thereof.

The composition of the invention can be produced by any means known to one skilled in the art. It is preferred that it be produced by the process disclosed herein.

According to the invention, a process for producing the composition disclosed above can comprise, consist essentially of, or consist of contacting either (1) a perfluoropolyether acid fluoride with a metal bromide or metal iodide or (2) heating a perfluoropolyether secondary halide under a condition sufficient to effect the production of a perfluoropolyether comprising at least one bromine or iodine at the primary position of one or more end groups of the perfluoropolyether. The process generally involves a β-scission reaction. The process is carried out under a condition or in a medium that is substantially free of a solvent. The process can also be carried out substantially free of a metal salt that is not a metal halide.

The acid fluoride including monoacid fluoride and diacid fluoride of formula I and II, respectively, can be contacted with a metal iodide such as lithium iodide, calcium iodide, or barium iodide to make either a secondary or primary perfluoropolyalkylether iodide with the evolution of carbon monoxide and formation of the metal fluoride according to Reaction 1 for the monofunctional acid fluoride and Reaction 2 for the difunctional acid fluoride. These reactions can be carried out at or above about 180 °C, preferably at or above about 220 °C.

Reaction 1: Φ-CF(CF₃)CF₂OCF(CF₃)C(O)-F + M_{(1/v')}I → Φ-CF(CF₃)CF₂-I + M_{(1/v')}F + CO + CF₃C(O)F

Reaction 2: FC(O)CF(CF₃)OCF₂CF(CF₃)-Φ'-CF(CF₃)CF₂OCF(CF₃)C(O)F + 2M_{(1/v')}I → ICF₂CF(CF₃)-Φ'-CF(CF₃)CF₂I + 2M'_{(1/v')}F + 2CO + 2CF₃C(O)F

wherein Φ, Φ' are as previously described, M' is a metal selected from Li, Ca, or Ba, and v' is the valency of the metal M'.

In accordance with the invention, a perfluoropolyether acid fluoride containing a -CF₂OCF(CF₃)COF moiety is combined with a metal bromide or metal iodide under a condition sufficient to effect the production of a perfluoropolyether primary bromide or iodide. The metal moiety can be an alkali metal, an alkaline earth metal, or combinations of two or more thereof. Examples of suitable metal bromide and metal iodide include but are not limited to, lithium iodide, calcium iodide, barium iodide, aluminum iodide, boron iodide, aluminum bromide, boron bromide, and combinations of two or more thereof. The conditions can include an elevated temperature such as, for example, at or above about 180 °C, preferably at or above about 220 °C, under a pressure that can accommodate the temperature for a sufficient time period such as, for example, about 1 hour to about 30 hours.

The process can also comprise contacting a perfluoropolyether acid fluoride containing a COF moiety in the secondary position such as, for example, CF(CF₃)CF₂OCF(CF₃)COF, with a bromide or iodide M'X under the conditions disclosed above.

According to the invention, the perfluoropolyether that can be used in the process of the invention can also comprise repeat units derived from the group consisting of -CF₂O-, -CF₂CF₂O-, -CF₂CF(CF₃)O-, -CF(CF₃)O-, -CF(CF₃)CF₂O-, -CF₂CF₂CF₂O-, -CF(CFₛ)O-, -CF₂CF(CFₛ)O-, -CF₂CF(CF₂CF₃)O-, -CF₂CF(CF₂CF₂CF₃)O-, -CF(CF₂CF₃)O-, -CF(CF₂CFCF₃)O-, -CH₂CF₂CF₂O-, -CF(Cl)CF₂CF₂O-, -CF(H)CF₂CF₂O-, CCl₂CF₂CF₂O-, -CH(Cl)CF₂CF₂O-, and combinations of two or more thereof.

Perfluoropolyether containing these repeat units are well known to one skilled in the art. For example, KRYTOX available from E. I. du Pont de Nemours and Company comprises the repeat units of -CF(CF₃)CF₂O-.

The following examples illustrate the invention process.

F(C₃F₆O)_{z'}CF(CF₃)CF₂OCF(CF₃)I → F(C₃F₆O)_{z'}CF(CF₃)CF₂I (monofunctional), or ICF(CF₃)OCF₂CF(CF₃)O(C₃F₆O)_{p'}R_{f}^{2'}O(C₃F₆O)_{n'}CF(CF₃)CF₂OCF(CF₃)I → ICF₂CF(CF₃)O(C₃F₆O)_{p'}R_{f}^{2'}O(C₃F₆O)_{n'}CF(CF₃)CF₂I (difunctional).

PFPE primary iodides can also be converted to their respective PFPE primary bromides by contacting them with carbon tetrabromide, for example, at 180 °C according to

F(C₃F₆O)_{z'}CF(CF₃)CF₂I + CBr₄ → F(C₃F₆O)_{z'}CF(CF₃)CF₂Br + ½I₂ + ½C₂Br₆

PFPE acid fluorides can also be converted to their respective acid bromides by contacting them with mixed metal bromides such as, for example, aluminum bromide mixed with boron bromide. The acid bromide can be isolated. The isolated acid bromide can be heated at elevated temperature such as, for example, about 340 °C.

### EXAMPLES

Examples 1 to 3 are not in accordance with the claimed invention.

### Example 1 and Comparative Examples A and B.

Separation of F[CF(CF₃)CF₂O]₆CF(CF₃)₂ (IPA-F, Example 1), F[CF(CF₃)-CF₂-O]₆-CF₂CF₃ (EF, Comparative Example A) and F[CF(CF₃)-CF₂-O]₇-CF₂CF₃ (EF, Comparative Example B) from KRYTOX® Fluid (F[CF(CF₃)-CF₂-O]ₗ-R_{f}, l = 3-11) by Fractional Distillation.

Samples for the aforementioned Examples were obtained via successive fractional vacuum distillations of KRYTOX Heat Transfer Fluids. In the first distillation, a 100-cm long, 3-cm ID (inner diameter) column was used. The column was packed with Raschig rings made from 1/4" OD (outer diameter)/3/16" ID FEP (fluorinated ethylene polypropylene) tubing (obtained from Aldrich, Milwaukee, Wisconsin) cut into pieces about 1/4" long. The distillation was carried out under dynamic vacuum conditions, and a pure sample of F[CF(CF₃)-CF₂-O]₇-CF₂CF₃ (Comparative Example B) (approximately 350 g) was obtained at an overhead temperature of 88 - 92°C as a fraction. At this point, previous fractions were combined and fluorinated with elemental fluorine at 100°C in the presence of NaF in order to totally remove any hydrogen containing materials prior to the second distillation.

For the second distillation, a 120-cm long, 2.4-cm ID column packed with 1/4" Monel saddle-shaped packing was used. This distillation was again carried out under dynamic vacuum (about 20 mTorr, 2.7 kPa), and pure samples of F[CF(CF₃)-CF₂-O]₆-CF₂CF₃ (Comparative Example A) with an overhead temperature of 68 - 72°C (200 g) and F[CF(CF₃)-CF₂-O]₆-CF(CF₃)₂ (Example 1) with an overhead temperature of 72 - 73°C (85 g) were collected.

### Example 2.

This example illustrates the production of a perfluoropolyether having paired perfluoro-n-propyl end groups.

### Addition of Hexafluoropropene (HFP) to a Perfluoropolyether Alcohol

F[CF(CF₃)CF₂O]₅CF(CF₃)CH₂OH + CF₂=CFCF₃ → F[CF(CF₃)CF₂O]₆CF(CF₃)CH₂OCF₂CHFCF₃

A perfluoropolyether alcohol (KRYTOX alcohol, available from E.I. du Pont de Nemours and Company, Wilmington, Delaware; 100.00 g) was added to a 250-ml round-bottomed flask. Acetonitrile (160 ml) and finely ground potassium hydroxide (4.87 g, 86.8 mmol) was then added to the flask with a magnetic stir bar to make a reaction mixture. Once the flask was connected to a vacuum line, the mixture was degassed. Upon vigorous stirring, the reaction mixture was heated to 60 °C. When the temperature reached 60 °C, a constant pressure of 650 mmHg (87 kPa) of hexafluoropropene was applied to the same flask. Stirring and applied pressure was maintained until the reaction did not take up any more hexafluoropropene. A color change was observed during the reaction from a light yellow to a dark orange when the reaction was completed. After the reaction, water was added to the reaction mixture and the bottom layer was removed via a separatory funnel. This was done three times to insure a clean product. Lastly, any solvent in the fluorous product layer was stripped by vacuum. Final mass of product, a perfluoropolyether-alcohol HFP adduct, was 97.77 g (86.5% yield).

### Fluorination of Perfluoropolyether-alcohol HFP Adduct

F[CF(CF₃)CF₂O]₆CF(CF₃)CH₂OCF₂CHFCF₃ + 20% F₂ / 80% N₂ → F[CF(CF₃)CF₂O]₇O(CF₂)₂CF₃

1,1,2-Trichlorotrifluoroethane (500 ml) and potassium fluoride (13.13 g, 22.6 mmol) were added to a fluorination reactor. Upon addition, the reactor was quickly closed and purged with dry nitrogen for 30 min at a rate of 300 ml/min. Next, the reactor was purged with 20% fluorine / 80% nitrogen for 30 min at a flow of 250 ml/min. The perfluoropolyether-alcohol HFP adduct (97.77g) was then added to the reactor via a pump at a rate of 0.68 ml/min with 480-490 ml/min flow of 20% fluorine, at a reactor stir rate of 800 rpm and a temperature of 25-28 °C for 76 min. In the next 30 min, the pump line was washed with an additional 20 ml of 1,1,2-trichlorotrifluoroethane. After a 106 min run time, the flow of fluorine was reduced to 250 ml/min for the next 60 min and then 40 ml/min with a stir rate of 600 rpm for the next 2 days. After the reaction, the system was purged with nitrogen. The product was removed and washed with water. The bottom layer was removed with a separatory funnel and the 1,1,2-trichlorotrifluoroethane was stripped from the product via the vacuum line. Final mass of the product was 91.96 g.

### Example 3A.

This example illustrates the production of a perfluoropolyether having an initial perfluoro-n-propyl end group and a final perfluoro-n-hexyl end group.

### Addition of 1-Perfluorohexene to a Perfluoropolyether Alcohol

F[CF(CF₃)CF₂O]₅CF(CF₃)CH₂OH + (H₃C)₂CHO⁻Na⁺ → F[CF(CF₃)CF₂O]₅CF(CF₃)CH₂ONa (1)

F[CF(CF₃)CF₂O]₅CF(CF₃)CH₂ONa + CF₂=CF(CF₂)₃CF₃ → F[CF(CF₃)CF₂O]₅CF(CF₃)CH₂OCF=CF(CF₂)₃CF₃ + F[CF(CF₃)CF₂O]₅CF(CF₃)CH₂OCF₂-CHF(CF₂)₃CF₃ (2)

A perfluoropolyether alcohol, KRYTOX alcohol (available from E. I. du Pont de Nemours and Company, Wilmington, Delaware; 74.6 g) was added to a 500-ml round-bottomed flask containing 6.25 g (H₃C)₂CHONa. After the colorless solid dissolved under stirring with the KRYTOX alcohol the isopropanol byproduct was removed under vacuum yielding 76.3 g liquid sodium salt (100% yield). The flask was cooled with liquid nitrogen and anhydrous acetonitrile (88 g) and perfluoro-1-hexene (24.0 g) were then added to the flask by vacuum transfer. After reaching room temperature the mixture was stirred to start a mildly exothermic reaction. After the reaction, the acetonitrile and un-reacted C₆F₁₂ were removed leaving 93.6 g of a non-volatile residue. The weight increase (17.3 g) indicated a 75.7% yield of crude product. Aqueous ammonium chloride solution was added to the reaction mixture, which was subsequently transferred into a separatory funnel. Phase separation was accomplished by adding a small amount of acetone and prolonged heating of the funnel to 90 °C. The lower layer was drained into a 250-ml round-bottomed flask and vacuum distilled via a 12 cm Vigreux column. 56.3 g of a mixture of saturated and unsaturated products were isolated.

### Fluorination of Perfluoropolyether-alcohol Perfluorohexene Adducts

F[CF(CF₃)CF₂O]₅CF(CF₃)CH₂OCF=CF(CF₂)₃CF₃ + F[CF(CF₃)CF₂O]₅CF(CF₃)CH₂OCF₂-CHF(CF₂)₃CF₃ + F₂ (20%) / N₂ (80%) → F[CF(CF₃)-CF₂O]₆(CF₂)₅CF₃

The products of the above procedure were combined in a FEP (FEP fluoropolymer, a tetrafluoroethylene/hexafluoropropylene copolymer) tube reactor (O.D. 5/8 in [1.6 cm]) equipped with an FEP dip-tube and treated with 20% F₂ / 80% N₂ at ambient temperature at a rate of ca. 30 ml/min for 2 days at which time the contents were transferred to a 300 ml stainless steel cylinder also equipped with a dip tube. Fluorination was continued for a day at 95°C at a similar flow rate. 22.2 g of pure product were isolated. The product was identified by its characteristic mass spectrum.

### Example 3B.

F[CF(CF₃)CF₂O]₅CF(CF₃)CH₂OH + NaH → F[CF(CF₃)CF₂O]₅CF(CF₃)CH₂ONa (1)

F[CF(CF₃)CF₂O]₅CF(CF₃)CH₂ONa + H₂C=CH(CF₂)₃CF₃ → F[CF(CF₃)CF₂O]₅CF(CF₃)CH₂OCH₂-CH=CF(CF₂)₂CF₃ (2)

A perfluoropolyether alcohol (KRYTOX alcohol, available from E. I. du Pont de Nemours & Company, Wilmington, Delaware; 55.51 g) of average molecular weight of 1586 g/mole was poured into a 50- ml round-bottomed flask with tetrahydrofuran (25 ml) and agitated with magnetic stirring. Next, sodium hydride (2.00 g, 0.084 mole) was added slowly via an addition funnel to the same reaction flask. The contents were stirred until no more evolution of hydrogen gas was evident. 1H,1H,2H-Perfluorohexane, (ZONYL PFBE, perfluorobutylethylene, available from E. I. du Pont de Nemours and Company, Wilmington, Delaware; 35 ml, 0.207 mole) was then added in a 6-mole excess to the poly(hexafluoropropylene oxide) sodium alkoxide and refluxed at 59°C for 24 hr. According to ¹H-NMR the percent conversion to the n-hexyl intermediate was calculated to be 86 %. Yield of total oil = 44.89 g.

F[CF(CF₃)CF₂O]ₙₙCF(CF₃)CH₂OCH₂-CH=CF(CF₂)₂CF₃ + F₂ (20%) / N₂ (80%) → F[CF(CF₃)-CF₂-O-]_{(nn + 1)}(CF₂)₅ CF₃

where nn is a number of 5 to 15.

The product of the above procedure were combined in an FEP tube reactor (O.D. 5/8 ") equipped with an FEP dip-tube and treated with 20% F2 / 80% N2 at ambient temperature at a rate of ca. 30 ml/min for 2 days at which time the contents were transferred to a 300 ml stainless steel cylinder also equipped with a dip tube. Fluorination was continued for a day at 95 °C at a similar flow rate. The product was identified by its characteristic mass spectrum.

### TEST METHOD AND RESULTS

### Test Method. Procedure for Measuring Thermal Stability

A 75-ml stainless steel HOKE cylinder topped with a 10-cm stainless steel spacer and valve was used to contain the poly(HFPO) sample for each thermal stressing experiment. The mass of the cylinder was taken and recorded after every step in the procedure. In a dry box, the cylinder was charged with AlF₃ (ca. 0.05 g), weighed, and then charged with about 1 g sample of monodisperse poly(HFPO) containing different end groups. (The AlF₃ used in these experiments was synthesized by the direct fluorination of AlCl₃ and was shown by X-ray powder diffraction to largely be amorphous.) The cylinder was then removed from the dry box and placed in a thermostatic oil bath at a predetermined temperature in the range of 200-270 ± 1.0 °C. The valve was kept cool by diverting a stream of room-temperature compressed air over it. After a period of 24 hours, the cylinder was cooled to room temperature, weighted, and then cooled further to liquid nitrogen temperature (-196 °C). Any non-condensable materials were stripped from the cylinder under dynamic vacuum. The cylinder was then warmed to room temperature, and the volatile materials were removed by vacuum transfer and stored for later analysis by FT-IR and NMR spectroscopy. Methanol was then added to the cylinder to convert any acid fluorides that might have resulted from the degradation to their corresponding methyl esters. The resulting non-volatile material was then separated from any unreacted methanol and analyzed by GC-mass spectrometry. The results from this experiment as well as those from additional and related experiments where the monodisperse poly(HFPO) samples have either perfluoroisopropyl, perfluoroethyl, perfluoro-n-propyl, or perfluoro-n-hexyl end-groups are shown in Table 1.

**Table 1**

| **Temperature (°C)** | 200 | 210 | 220 | 230 | 240 | 250 | 260 | 270 |
|---|---|---|---|---|---|---|---|---|
| **Percent of F[HFPO]₆-CF₂CF₃** | --^{a} | 37.4^{c} | 96.3^{c} | -- | -- | -- | -- | -- |
| **(Comparative Example A) degraded** | | | | | | | | |
| **Percent of F[HFPO]₇-CF₂CF₃** | 1.8 | 30.8 | -- | -- | -- | -- | -- | -- |
| **(Comparative Example B) degraded** | | | | | | | | |
| **Percent of F[HFPO]₆-CF(CF₃)₂** | -- | 6.2 | 14.2^{b}, 13.6 | 12.6 | 11.7 | 76.8 | 51.9 | 86.2 |
| **(Example 1) degraded** | | | | | | | | |
| **Percent of F[HFPO]₇-CF₂CF₂CF₃** | -- | -- | 86.5 | -- | -- | -- | 81.8 | -- |
| **(Example 2) degraded** | | | | | | | | |
| **Percent of F[HFPO]₆-(CF₂ )₅(CF₃)** | -- | -- | 59.4 | -- | -- | 100 | -- | -- |
| **(Example 3) degraded** | | | | | | | | |

| | | | | | | | | |
|---|---|---|---|---|---|---|---|---|
| ^{a} --, not determined. ^{b} Replicates, ^{c} Average of triplicates. | | | | | | | | |

Table 1 shows a substantial reduction in the amount of degradation of a poly(HFPO) fluid having a normal perfluoropropyl group on one end and any group C₃ to C₆ on the other as compared with the poly(HFPO) containing a normal perfluoropropyl end group on one end and perfluoroethyl end group on the other, demonstrating the greater stabilizing effect of the perfluoro C₃ to C₆ terminal groups.

### Example 4. Preparation of CF₃(CF₂)₂(OCF(CF₃)CF₂)_{(n"-1)}OCF(CF₃)CF₂I from the corresponding secondary iodide CF₃(CF₂)₂(OCF(CF₃)CF₂)ₙOCF(CF₃)I having n"∼8.

The polyhexafluoropropylene oxide homopolymer (HFPO) secondary iodide, CF₃(CF₂)₂(OCF(CF₃)CF₂)_{n"}OCF(CF₃)I having n∼8, used as the starting material in this example, was made by first adding lithium iodide (Aldrich Chemical, Mihwaukee, WI) (117.78 g) to a nitrogen-purged 2-L PYREX round-bottomed flask. KRYTOX Acid Fluoride (907.18 g) (available from E.I. du Pont de Nemours Co., Inc, Wilmington, DE) was then added to the flask, and the mixture was heated at 180 °C for 15 hours with stirring. The oil was filtered through a CELITE bed and analyzed by mass spectrometry and ¹³C NMR spectroscopy. From the mass spectrum, fragments at 227 m/z (-CFICF₃) and 393 m/z (-CF(CF₃)CF₂OCFICF₃) are indicative of the secondary iodide. Nuclear magnetic resonance (NMR) analysis showed the carbon bonded to iodine at 78.1 ppm d,q; -CFICF₃; ¹J_{CFI} = 314.8 Hz, ²J_{CF3} = 43.3Hz (¹³C NMR: 75.5 MHz, D₂O/TMS).

Polyhexafluoropropylene oxide homopolymer (HFPO) secondary iodide (200.0 g, prepared as above) was added to a 500-mL PYREX round-bottomed flask and heated to 220 °C for 4 hours with stirring. The oil was filtered through CELITE (a SiO₂ filter aid), and analyzed by mass spectrometry and ¹³C NMR spectroscopy. The HFPO primary iodide was identified by mass spectrometry analysis, mass fragments of m/z = 277 (-CF(CF₃)CF₂I) and m/z = 177 (-CF₂I) prove the structure of the desired product. By ¹³C NMR spectroscopy, peaks specific to the desired product were detected at 93.8 ppm (t,d, -CF(CF₃)CF₂I, ¹J_{CF} = 332.94 Hz, ²J_{CF} = 33.19 Hz) and at 93.9 ppm (t,d, -CF(CF₃)CF₂I, ¹J_{CF} = 332.94 Hz, ²J_{CF} = 33.19 Hz). Yield: 187.0 g.

### Example 5. Preparation of CF₃(CF₂)₂(OCF(CF₃)CF₂)_{(n"-1)}OCF(CF₃)CF₂I from KRYTOX Acid Fluoride having n∼8.

Lithium iodide (187.71 g) was added to a nitrogen purged 2-L PYREX round-bottomed flask. Upon addition of KRYTOX Acid Fluoride (1,651.3 g), the flask was heated at 220 °C for 15 hours with stirring. The oil was filtered through CELITE and determined to be identical to the above product. Yield 1447.6 g.

### Example 6. Preparation of CF₃(CF₂)₂(OCF(CF₃)CF₂)_{(n"-1)}OCF(CF₃)CF₂I from KRYTOX Acid Fluoride having n∼8.

Calcium iodide (Aldrich Chemical, Milwaukee, WI) (20.72 g) was added to a nitrogen purged 500-ml round-bottomed flask in a dry box. Next, KRYTOX Acid Fluoride (100.00 g) was added, and the mixture was heated at 220 °C for 12 hours with stirring. The product was allowed to cool to room temperature and was filtered through CELITE. The product was consistent with earlier results. Yield 60.62 g.

### Example 7. Preparation of CF₃(CF₂)₂(OCF(CF₃)CF₂)_{(n"-1)}OCF(CF₃)CF₂I from KRYTOX Acid Fluoride having n∼6.

Barium iodide (Aldrich Chemical, Milwaukee, WI) (5.00 g) was added to a nitrogen purged 50-mL round-bottomed flask. Next, KRYTOX Acid Fluoride (13.1 g) was added to the flask. The reaction mixture was heated at 220°C for 12 hours while stirring. The primary iodide was identified by GC/MS and was consistent with earlier results. Yield: 5.1 g.

### Example 8. Preparation of CF₃(CF₂)₂(OCF(CF₃)CF₂)_{(n"-1)}OCF(CF₃)CF₂I from KRYTOX Acid Fluoride having n∼52.

Lithium iodide (52.0 g) was added to a nitrogen purged 5-L PYREX round-bottomed flask. Upon addition of KRYTOX Acid Fluoride (2720 g), the mixture was heated at 220 °C for 20 hours with stirring. The oil was filtered through CELITE and determined to be the desired products. Yield 2231.76 g.

### Example 9. Preparation of CF₃(CF₂)₂(OCF(CF₃)CF₂)_{(n"-1)}OCF(CF₃)CF₂Br from the corresponding acid fluoride.

Step 1. 5.57 g F(CF(CF₃)CF₂O)₅CF(CF₃)COF, 0.53 g AlBr₃ (Aldrich Chemical, Milwaukee, WI), and 2.65 g BBr₃ (Aldrich Chemical, Milwaukee, WI) were loaded into a 75-ml stainless steel cylinder in a glove box. The cylinder was closed with a valve and kept at ambient temperature for 24 h with occasional shaking. After that, the liquid content was removed with a pipette and filtered. The subsequent ¹³C NMR spectroscopy shows quantitative conversion of the Acid Fluoride to the acid bromide.
Step 2: Conversion of the acid bromide to the HFPO primary bromide. 3.82 g of product from above was loaded into a 75-ml stainless steel cylinder within a glove box, closed with a valve, evacuated, weighed, and heated to 250 °C for 16 h. Additional heating to 340 °C overnight produced 0.08 g CO and other volatiles. Investigation of the liquid residue by ¹³C NMR spectroscopy showed total disappearance of the acid bromide and new signals for the primary bromide. Along with the other signals expected, the chemical shift for the -CF₂Br carbon is found at δ = 115.6 ppm; t, d; ¹J_{CF2} = 313.8 Hz, ²J_{CF} = 32.5 Hz thus establishing the identity of the desired product.

### Example 10. Preparation of CF₃(CF₂)₂(OCF(CF₃)CF₂)_{n"}OCF(CF₃)CF₂Br from the corresponding Iodide.

Poly(hexafluoropropylene oxide) primary iodide (469.3 g) prepared, as in Example 6, was added to a nitrogen purged 500-ml round-bottomed flask. With stirring, carbon tetrabromide (Aldrich Chemical, Milwaukee, WI) (115.9 g) was charged to the flask and heated slowly to 175-185 °C and held at that temperature for 3 days. The primary bromide was identified by mass spectrometry, with mass fragments of m/z = 229 and m/z = 231 (-CF(CF₃)CF₂Br) and m/z = 129 and m/z = 131 (-CF₂Br) being indicative of the HFPO primary bromide. Yield: 299 g.

### Comparative Example C

(Method A) A thermal reaction was attempted between KRYTOX Acid Fluoride and sodium iodide (Aldrich Chemical, Milwaukee, WI) at a temperature of 220 °C. Sodium iodide (27.11 g) and KRYTOX Acid Fluoride (186.34 g) were added to a nitrogen purged 500-ml round-bottomed flask equipped a thermocouple and reflux condenser. The reactants were heated at 220°C for 12 hours while stirring. The product was filtered through CELITE and analyzed with mass spectrometry. No reaction was observed.

(Method B) A reaction was attempted between KRYTOX Acid Fluoride, sodium iodide, and acetonitrile at 50 °C to reproduce prior art as reported in US Patent 5,278,340. Sodium iodide (42.85 g) and KRYTOX Acid Fluoride (160.00 g) were added to a nitrogen purged 250-ml round-bottomed flask equipped with a thermocouple and reflux condenser. Next, acetonitrile (7.00 g) was added. The reactants were stirred while heating at 50 °C for 12 hours. The product was filtered through CELITE and analyzed by mass spectrometry. No reaction was observed.

Comparative Example C demonstrates that sodium iodide alone or sodium iodide dissolved in acetonitrile does not form a poly(hexafluoropropylene oxide) iodide.

### Comparative Example D

Potassium iodide (Aldrich Chemical, Milwaukee, WI) (36.52 g) was added to a nitrogen purged 500-ml round-bottomed flask and heated at 110 °C for 30 min to dry the salt. Next, KRYTOX Acid Fluoride (226.79 g) was added to the flask and the contents of the flask were heated at 180°C for 12 hours. After the reaction, the product was filtered through CELITE and analyzed by mass spectrometry. No reaction was observed.

Comparative Example D demonstrates that potassium iodide cannot be used to form a poly(hexafluoropropylene oxide) iodide.

### Comparative Example E

Lithium bromide (Aldrich Chemical, Milwaukee, WI) (25.0 g) was added to a nitrogen purged 50-ml round-bottomed flask. Next, KRYTOX Acid Fluoride (149.0 g) was added to the reaction flask. The reaction mixture was heated at 220°C for 12 hours with stirring. The product was washed with methanol, then water, and analyzed by mass spectrometry. No reaction was observed.

Comparative Example E demonstrates that lithium bromide cannot be used to form a poly(hexafluoropropylene oxide) bromide.

## Claims

1. A composition comprising a perfluoropolyether, which has the formula of F[C₃F₆O]_{z'}CF(CF₃)CF₂X, F[C₃F₆O]_{z'}CF₂CF₂X, XCF₂CF(CF₃)O(C₃F₆O)_{p'}R_{f}^{2'}O(C₃F₆O)_{n'}CF(CF₃)CF₂X, XCF₂CF₂O(C₃F₆O)_{x'}CF(CF₃)CF₂X, (R_{f}^{1'})(R_{f}^{1'})CFO(C₃F₆O)_{x'}CF(CF₃)CF₂X, or combinations of two or more thereof wherein X is I or Br, x' is a number from 2 to about 100, z' is a number from about 5 to about 100, p' is a number from 2 to about 50, n' is a number from 2 to about 50 , each R_{f}^{1'} is independently a monovalent C₁ to C₂₀ branched or linear fluoroalkane, and R_{f}^{2'} is a divalent C₁ to C₂₀ branched or linear fluoroalkane.

2. A composition according to claim 1 further comprising a thickener and said perfluoropolyether is present in said composition in the range of from about 0.1 to about 50 weight % based on said composition.

3. A composition according to claim 2 wherein said thickener is selected from the group consisting of poly(tetrafluoroethylene), fumed silica, and boron nitride, and combinations of two or more thereof

4. A process comprising contacting (1) a perfluoropolyether acid fluoride with a metal bromide or metal iodide or (2) heating a perfluoropolyether secondary halide, under a condition sufficient to effect the production of a perfluoropolyether comprising at least one bromine or iodine in the primary position of one or more end groups of the perfluoropolyether wherein said process is carried out substantially free of a solvent and said acid fluoride moiety comprises -CF₂OCF(CF₃)COF moiety.

5. A process according to claim 4 wherein process comprises contacting said perfluoropolyether primary iodide with carbon tetrabromide.

6. A process according to claim 4 wherein said process comprises contacting said perfluoropolyether acid fluoride with mixed metal bromides, mixed metal iodides, or combinations thereof.

7. A process according to claim 6 wherein said mixed metal bromide and iodide is a mixture of aluminum bromide and boron bromide.

8. A process according to claim 4 wherein the metal moiety of said metal bromide or metal iodide is selected from the group consisting of lithium, calcium, barium, aluminum, boron, and combinations of two or more thereof.

9. A process according to any one of claims 4-8 wherein said perfluoropolyether acid fluoride comprises repeat units derived from the group consisting of -CF₂O-, -CF₂CF₂O-, -CF₂CF(CF₃)O-, -CF(CF₃)O-, -CF(CF₃)CF₂O-, -CF₂CF₂CF₂O-, -CF(CFₛ)O-, -CF₂CF(CFₛ)O-, -CF₂CF(CF₂CF₃)O-, -CF₂CF(CF₂CF₂CF₃)O-, -CF(CF₂CF₃)O-, -CF(CF₂CF₂CF₃)O-, -CH₂CF₂CF₂O-, -CF(Cl)CF₂CF₂O-, -CF(H)CF₂CF₂O-, CCl₂CF₂CF₂O-, -CH(Cl)CF₂CF₂O-, and combinations of two or more thereof.

## Patentansprüche

1. Zusammensetzung, umfassend einen Perfluorpolyether, der die folgende Formel aufweist: F[C₃F₆O]_{x'}CF(CF₃)CF₂X, F[C₃F₆O]_{x'}CF₂CF₂X, XCF₂CF(CF₃)O(C₃F₆O)_{p'}R_{f}^{2'}O(C₃F₆O)_{n'}CF(CF₃)CF₂X, XCF₂CF₂O(C₃F₆O)_{x'}CF(CF₃)CF₂X, (R_{f}^{1'})(R_{f}^{1'})CFO(C₃F₆O)_{x'}CF(CF₃)CF₂X oder Kombinationen aus zwei oder mehr davon, worin X für I oder Br steht, x' eine Zahl von 2 bis ca.100 darstellt, z' eine Zahl von ca. 5 bis ca. 100 darstellt, p' eine Zahl von 2 bis ca. 50 darstellt, n' eine Zahl von 2 bis ca. 50 darstellt, jedes R_{f}^{1'} unabhängig ein monovalentes, verzweigtes oder lineares C₁- bis C₂₀-Fluoralkan und R_{f}^{2'} ein divalentes, verzweigtes oder lineares C₁- bis C₂₀-Fluoralkan darstellt.

2. Zusammensetzung nach Anspruch 1, die ferner ein Verdickungsmittel umfasst und der Perfluorpolyether in der Zusammensetzung im Bereich von ca. 0,1 bis ca. 50 Gew.-% bezogen auf die Zusammensetzung anwesend ist.

3. Zusammensetzung nach Anspruch 2, worin das Verdickungsmittel aus der Gruppe ausgewählt ist, bestehend aus Poly(tetrafluorethylen), pyrogenem Siliciumdioxid, und Bornitrid, und Kombinationen aus zwei oder mehr davon.

4. Verfahren, das Folgendes umfasst: In Kontakt bringen (1) eines Perfluorpolyether-Säurefluorids mit einem Metallbromid oder Metalliodid oder (2) Erhitzen eines sekundären Halogenids des Perfluorpolyethers, unter einer Bedingung, die zur Bewirkung der Produktion eines Perfluorpolyethers ausreichend ist, umfassend mindestens ein Brom oder Iod in der primären Position von einer oder mehr Endgruppe(n) des Perfluorpolyethers, worin das Verfahren im Wesentlichen frei von Lösungsmittel durchgeführt wird und der Säurefluoridteil einen -CF₂OCF(CF₃)COF-Teil umfasst.

5. Verfahren nach Anspruch 4, worin das Verfahren das in Kontakt bringen des primären lods des Perfluorethers mit Kohlenstofftetrabromid umfasst.

6. Verfahren nach Anspruch 4, worin das Verfahren das in Kontakt bringen des Perfluorpolyether-Säurefluorids mit gemischten Metallbromiden, gemischten Metalliodiden oder Kombinationen davon umfasst.

7. Verfahren nach Anspruch 6, worin das gemischte Metallbromid und -iodid ein Gemisch aus Aluminiumbromid und Borbromid darstellt.

8. Verfahren nach Anspruch 4, worin der Metallteil des Metallbromids oder Metalliodids aus der Gruppe ausgewählt ist, bestehend aus Lithium, Calcium, Barium, Aluminium, Bor und Kombinationen von zwei oder mehr davon.

9. Verfahren nach einem der Ansprüche 4 bis 8, worin das Perfluorpolyether-Säurefluorid Wiederholungseinheiten umfasst, die sich aus der Gruppe herleiten, bestehend aus: -CF₂O-, -CF₂CF₂O-, -CF₂CF(CF₃)O-, -CF(CF₃)O-, -CF(CF₃)CF₂O-, -CF₂CF₂CF₂O-, -CF(CF₃)O-, -CF₂CF(CF₃)O-, -CF₂CF(CF₂CF₃)O-, -CF₂CF(CF₂CF₂CF₃)O-, -CF(CF₂CF₃)O-, -CF(CF₂CF₂CF₃)O-, -CH₂CF₂CF₂O-, -CF(Cl)CF₂CF₂O-, -CF(H)CF₂CF₂O-, -CCl₂CF₂CF₂O-, -CH(Cl)CF₂CF₂O- und Kombinationen aus zwei oder mehr davon.

## Revendications

1. Composition comprenant un perfluoropolyéther, qui a la formule de F[C₃F₆O]_{z'}CF(CF₃)CF₂X, F [C₃F₆O]_{x'}CF₂CF₂X, XCF₂CF(CF₃)O(C₃F₆O)_{p'}R_{f}^{2'}O(C₃F₆O)ₙ,CF(CF₃)CF₂X, XCF₂CF₂O(C₃F₆O)_{x'}CF(CF₃)CF₂X, (R_{f}^{1'}) (R_{f}^{1'})CFO(C₃F₆O)_{x'}CF(CF₃)CF₂X, ou combinaisons d'au moins deux de ces composés, dans laquelle X est I ou Br, x' est un nombre de 2 à environ 100, z' est un nombre d'environ 5 à environ 100, p' est un nombre de 2 à environ 50, n' est un nombre de 2 à environ 50, chaque R_{f}^{1'} est indépendamment un fluoroalcane linéaire ou ramifié monovalent en C₁-C₂₀ et R_{f}^{2'} est un fluoroalcane linéaire ou ramifié divalent en C₁-C₂₀.

2. Composition selon la revendication 1, comprenant en outre un épaississant et dans laquelle ledit perfluoropolyéther est présent dans une plage allant d'environ 0,1% à environ 50% en poids de ladite composition.

3. Composition selon la revendication 2, dans laquelle ledit épaississant est sélectionné parmi le groupe constitué du poly(tétrafluoroéthylène), du quartz et du nitrure de bore, et des combinaisons d'au moins deux de ces composés.

4. Procédé comprenant la mise en contact (1) d'un fluorure d'acide perfluoropolyéther avec un bromure de métal ou un iodure de métal ou (2) le chauffage d'un halogénure secondaire de perfluoropolyéther, dans une condition suffisante pour réaliser la production d'un perfluoropolyéther comprenant au moins un brome ou un iode dans la position primaire d'un ou plusieurs groupes terminaux du perfluoropolyéther, dans lequel ledit procédé est conduit en substance sans solvant et ledit groupement fluorure d'acide comprend un groupement - CF₂OCF(CF₃)COF.

5. Procédé selon la revendication 4, dans lequel ledit procédé comprend la mise en contact dudit iodure primaire de perfluoropolyéther avec le tétrabromure de carbone.

6. Procédé selon la revendication 4, dans lequel ledit procédé comprend la mise en contact dudit fluorure d'acide de perfluoropolyéther avec des bromures de métal mixtes, des iodures de métal mixtes ou des combinaisons de ces composés.

7. Procédé selon la revendication 6, dans lequel ledit bromure et iodure de métal mixte est un mélange de bromure d'aluminium et de bromure de bore.

8. Procédé selon la revendication 4, dans lequel le groupement métallique dudit bromure de métal ou iodure de métal est sélectionné parmi le groupe constitué du lithium, du calcium, du baryum, de l'aluminium, du bore, et des combinaisons d'au moins deux de ces composés.

9. Procédé selon l'une quelconque des revendications 4 à 8, dans lequel ledit fluorure d'acide de perfluoropolyéther comprend des unités répétées dérivées du groupe constitué de -CF₂O-, -CF₂CF₂O-, -CF₂CF(CF₃)O-, -CF(CF₃)O-, -CF (CF₃)CF₂O-, -CF₂CF₂CF₂O-, -CF(CF₃)O-, CF₂CF(CF₃)O-, -CF₂CF(CF₂CF₃)O-, -CF₂CF(CF₂CF₂CF₃)O-, -CF(CF₂CF₃)O-, -CF(CF₂CF₂CF₃)O-, -CH₂CF₂CF₂O-, -CF(C1)CF₂CF₂O-, -CF(H)CF₂CF₂O-, CCl₂CF₂CF₂O-, -CH(Cl)CF₂CF₂O-, et les combinaisons d'au moins deux de ces composés.
